Europäisches Patentamt

European Patent Office

Office européen des brevets

(11) Publication number: 0 347 089 A1

# EUROPEAN PATENT APPLICATION

(21) Application number: 89305706.7

(51) Int. Cl.⁴: **H02K 31/02** , **H02K 31/04**

(22) Date of filing: 06.06.89

(30) Priority: 16.06.88 GB 8814323

(43) Date of publication of application:
20.12.89 Bulletin 89/51

(84) Designated Contracting States:
DE FR GB IT SE

(71) Applicant: JAGUAR CARS LIMITED
Browns Lane
Allesley Coventry CV5 9DR West
Midlands(GB)

(72) Inventor: Parsons, Bryan Nigel Victor
2 Church Street
Stoney Stanton Leicestershire(GB)

(74) Representative: Cundy, Anthony Brian et al
Anthony Cundy & Company 384 Station
Road Dorridge
Solihull West Midlands B93 8ES(GB)

(54) Homopolar devices.

(57) A homopolar device has a rotor (10) with an armature (12) made of ferromagnetic material, the outer circumferential portion (13) being of good electrical conductivity. The rotor (10) is surrounded by a ferromagnetic stator (16, 17, 18), field coils (19, 20) being provided on the stator (16, 17, 18) which may be connected to an alternating current supply to provide an alternating magnetic field which is substantially radial across the outer circumferential portion (13) of the armature (12). The stator (16, 17, 18) includes an annular ferromagnetic core (18), primary and secondary windings (21, 26) being provided on the ferromagnetic core (18), the primary winding (21) being connected electrically at axially spaced locations to the outer circumferential portion (13) of the armature (10), by means of rotary contacts (24, 25). Each of the rotary contacts (24, 25) includes a pair of annular elements (30, 31), one mounted on and in electrical contact with the armature (10) and the other in electrical contact with the primary winding (21). The first annular element (30) has a plurality of conductive sectors (38) separated by non-conductive sectors (37) and the second annular element (31) has one or more conductive sectors (40) with one or more non-conductive sectors (41), the conductive sectors (38) of the first and second annular elements (30) being arranged to maintain electrical contact upon rotation of the armature (10), the conductive sectors (38) on the first annular element (30) and the non-conductive sectors (41) on the second annular element (31) being dimensional and angularly disposed so that at all times there will be a break in the annular conductive path defined by the two annular elements (30, 31).

FIG 2

FIG 3

## HOMOPOLAR DEVICES

The present invention relates to homopolar devices, that is homopolar motors or generators.

Conventional homopolar motors are capable of producing high torques suitable for driving, for example, the wheels of a motor vehicle. However, the conventional homopolar motor requires a low voltage, extremely high current DC supply, typically several thousand amps at about half a volt. Such DC supplies can be produced by homopolar generators, but problems arise in transmitting the supply from the generator to the motor.

It has been proposed to overcome this difficulty by using an alternating magnetic field to produce a low voltage high current alternating supply and incorporating a transformer into the stator of the homopolar generator/motor by which, the low voltage, high current AC supply from the generator may be transformed into a high voltage, low current alternating supply for transmission purposes and then converted back into a low voltage, high current AC supply at the motor.

With the generator/transformer, motor/transformer devices disclosed to date, current induced in the rotor is transmitted to the primary of the transformer by means of a pair of annular rotary electrical contacts. Such rotary contacts have incorporated a continuous annular conductive element on one component, for example a continuous ring of conductive material or conductive liquid metal and brushes or contacts on the other component.

Such rotary contacts involve a continuous annular conductive path. The alternating fields produced by the field windings of the homopolar generator/motor will induce a current in this continuous annular conductive path which will generate a magnetic field opposing the magnetic field produced by the field windings and as a result considerably weakening the alternating field produced by the field windings.

According to one aspect of the present invention a homopolar device comprises a rotor having an armature made of ferromagnetic material, at least the outer circumferential portion of the armature being of good electrical conductivity, said rotor being surrounded by a ferromagnetic stator, field coils are provided on the stator, said field coils being adapted to be connected to an alternating current supply and being arranged to provide an alternating magnetic field which is substantially radial across the outer circumferential portion of the armature; said stator including an annular ferromagnetic core, primary and secondary windings being provided on the ferromagnetic core, the primary loop being connected at axially spaced locations to the outer circumferential portion of the armature by means of rotary contacts, characterised in that each rotary contact comprises first and second annular elements, one annular element mounted on and in electrical contact with the armature and the other annular element in electrical contact with the primary winding, the first annular element having a plurality of conductive sectors separated by non-conductive sectors and the second annular element having one or more conductive sectors with one or more non-conductive sectors, the conductive sectors of the first and second annular elements being arranged to maintain electrical contact upon rotation of the armature, the conductive sectors on the first annular element and the non-conductive sectors on the second annular element being dimensioned and angularly disposed so that at all times there will be a brake in the annular conductive path defined by the two annular elements.

The present invention will consequently avoid the formation of annular electrical currents and thus the weakening of the magnetic field produced by the field windings.

According to one preferred embodiment of the present invention, the or each non-conductive sector of the second annular element is of greater width than any of the conductive sectors of the first annular element. With this form of construction, the second annular element will preferably comprise a single conductive sector which is broken by a single non-conductive sector. As with this embodiment, the conductive path between the armature and the primary loop is reduced in proportion to the width of the non-conductive sector, in order to maximise power capacity, the non-conductive sector of the second annular element and thus the conductive sectors of the first annular element should be made as narrow as possible within practical limitations. It is consequently desirable that the first annular element should be formed from a relatively large number of conductive sectors. For example, in order to maintain power capacity above 90%·of maximum theoretical, ten or more conductive sectors will be required on the first annular element.

According to a further preferred embodiment of the present invention, both the first and second annular elements have a plurality of conductive sectors, the second annular element having fewer sectors than the first and the width of the non-conductive sectors of the second annular element having the following relationship to the width of the conductive sectors of the first annular element:-
$$\alpha \, m \, / \, (n - m) > \beta$$

Where m = the number of non-conductive sectors on the second annular element;

n = the number of conductive sectors on the first annular element;

α = the angular width of the non-conductive sectors on the second annular element; and

β = the angular width of the conductive sectors on the first annular element.

In order to maintain electrical engagement between the conductive sectors of the first and second annular elements, the conductive sectors of one annular element may be in the form of brushes which are spring loaded into engagement with the conductive sectors of the other annular element. In this case, particularly where the non-conductive sectors are of greater width than the brushes, the non-conductive sectors may be formed from an insulative material which forms a continuous cylindrical surface with the faces of the conductive sectors. Alternatively, the conductive sectors of one of the annular elements may be formed from a conductive liquid metal, the conductive sectors on the other annular element being arranged to pass through the liquid metal, means being provided to restrict the liquid metal to the conductive sectors of the annular element.

Embodiments of the invention are now described, by way of example only, with reference to the accompanying drawings in which:-

Figure 1 illustrates in axial cross-section, a homopolar generator formed in accordance with the present invention;

Figure 2 illustrates in detail the rotary contact used in the homopolar generator illustrated in Figure 1; and

Figure 3 illustrates an alternative form of rotary contact which may be used in the homopolar generator illustrated in Figure 1.

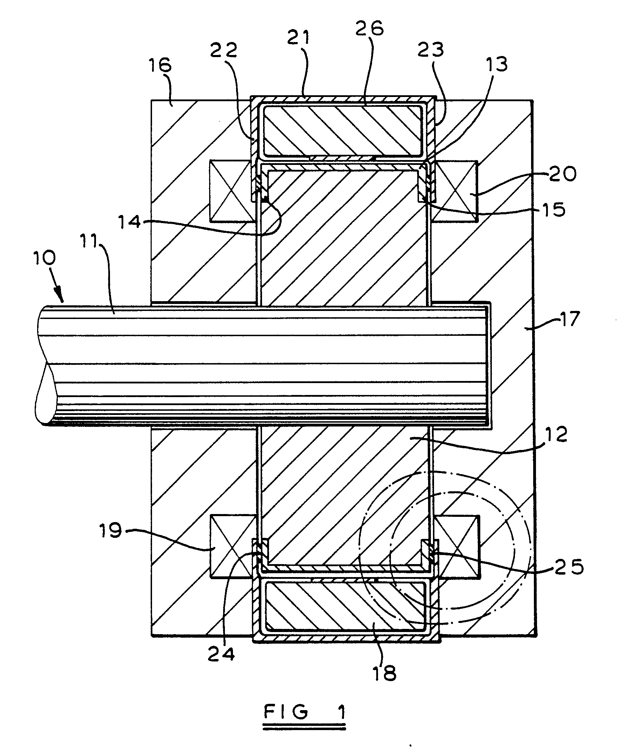

The homopolar generator illustrated in Figure 1 includes a rotor 10 having a shaft 11 mounted for rotation in suitable bearings (not shown). An annular armature 12 made of ferromagnetic material is provided on shaft 11. Sleeve 13 made of a material of good electrical conductivity, for example copper, is provided about the outer periphery of the armature 12. Flange portions 14 and 15 are provided at either end of sleeve 13 and extend part way along the radial faces of the armature 12.

The armature 12 is mounted to rotate within a stator which is defined by a pair of ferromagnetic plates 16 and 17 and an annular ferromagnetic core 18. A pair of helically wound annular field coils 19 and 20 are provided, one recessed in each of the end plates 16 and 17 adjacent the inner periphery of the annular core 18.

The field coils 19 and 20 are adapted to be connected to an alternating current supply, so that they will produce an alternating magnetic field as indicated in broken line. A flux path is provided by the end plates 16 and 17, annular core 18 and armature 12, so that the field passing through the sleeve 13 will be substantially radial.

A primary loop, in the form of sleeve 21 of material of good electrical conductivity, is provided about the outer periphery of annular core 18 and has flange portions 22 and 23 which extend inwardly along the radial edges of core 18. The flange portions 22 and 23 also overlap radially but are spaced axially from the flanges 14 and 15 of sleeve 13.

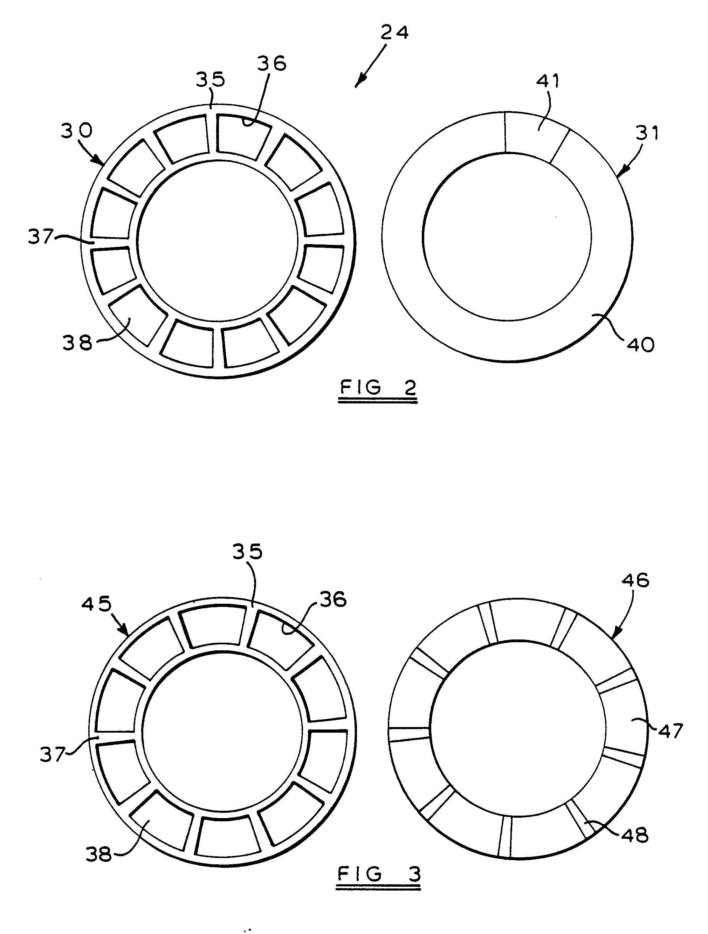

Rotary contacts 24 and 25, described in greater detail with reference to Figures 2 and 3, interconnect the overlapping annular portions of flanges 14 and 22 and 15 and 23 respectively, so as to connect sleeve 21 across sleeve 13.

A secondary multi-wound coil 26 is wound toroidally about the core 18 underlying and electrically insulated from the sleeve 21. In operation, the rotor 10 of the generator may be driven by a prime mover. An alternating current supply may also be provided for the field coils 19 and 20 by means of an AC generator which may also be driven by the prime mover, although the main supply may be used for this purpose. Upon rotation of the conductive sleeve 13 in the alternating magnetic field produced by the field coils 19 and 20, a low voltage extremely high current, alternating current, is generated. Typically, such a generator would have an output of from 40 to 80 KW providing 80,000 to 160,000 amps at 0.5 volts. The frequency, which is decided by the frequency of the current energising the field coils 19 and 20, may be from 20Hz to 2MHz.

The current generated in the conductive sleeve 13 then passes via the rotary contacts 24 and 25 into the primary loop formed by sleeve 21 and is transformed into a relatively high voltage low current, alternating current, typically 40 to 400 amps at 200 to 600 volts, in the secondary winding 26. This transformed current may then be conducted using conventional cables.

The rotary contacts 24 and 25 are of identical construction and only one is illustrated in Figure 2, which shows the inter-engaging faces of a pair of annular elements 30 and 31 which form the rotary contacts.

The annular element 30 is mounted on the flange portion 22 of the sleeve 20 forming the primary of the transformer and annular element 31 is mounted, coaxially opposed to the annular element 30, on the flange 14 of sleeve 13.

The annular element 30 comprises an annular brush holder 35 made of insulative material. The brush holder 35 defines twelve sectoral axially extending apertures 36 separated by walls 37. The apertures 36 have an angular width of 25° and the wall 37 an angular thickness of 5°.

Brushes 38 are slidingly located in the apertures 36 and are in electrical connection with the flange 22. Spring means is provided to resiliently load each of the brushes 38 into engagement with the opposed face of annular element 31.

The annular element 31 comprises a conductive sector 40 which defines 330° of a ring. The 30° gap 41 between the ends of portion 40 is filled with an insulative material, the surface of the insulative material in gap 41 being flush with the surface of portion 40 which is engaged by the brushes 38. The conductive portion 40 is electrically connected to the sleeve 13.

With the rotary contact described above, as the gap 41 is wider than any of the brushes 38, the brushes 38 cannot bridge the gap and consequently as the armature 12 rotates a continuous conductive path in which an annular current could be induced, is never formed.

In the rotary contact illustrated in Figure 3, the annular element 45 is of similar construction to element 30 but has ten brushes 38, each having an annular width of 31° and being separated by gaps of annular width 5°.

The other ring 46 is formed from nine conductive sectors 47 having an angular width of 35° and separated from one another by 5° gaps 48 which are filled with insulative material.

With this rotary contact, as the brushes 38 of annular element 45 run over the opposed face of annular element 46, at all times, one of the gaps 48 will overlap one of the gaps between the brushes 38 defined by the walls 37, thus ensuring that a complete annular conductive path is not formed.

It should be appreciated that while in the above description the elements of the rotary contacts have been described as annular and are divided into conductive and non-conductive sectors, the elements need not actually be circular so long as they define an annular path and the ends of the conductive and non-conductive portions need not be radial provided that they interrupt the conductive path. For example the conductive and non-conductive portions may be provided with end formations which will interlock to hold the conductive and non-conductive portions together.

Various modifications may be made without departing from the invention. For example, the homopolar generator illustrated in Figure 1 is only indicative of the type of homopolar devices to which the present invention will apply. The rotary contacts which form the basis of the present invention may be used with other homopolar generators or motors.

While in the embodiment illustrated in Figure 3 the brushes and conductive sectors are radially symmetrical, other configurations may be used.

## Claims

1. A homopolar device comprising a rotor (10) having an armature (12) made of ferromagnetic material, at least the outer circumferential (13) portion of the armature (12) being of good electrical conductivity, said rotor (10) being surrounded by a ferromagnetic stator (16, 17, 18), field coils (19, 20) are provided on the stator (16, 17, 18), said field coils (19, 20) being adapted to be connected to an alternating current supply and being arranged to provide an alternating magnetic field which is substantially radial across the outer circumferential portion (13) of the armature (12); said stator (16, 17, 18) including an annular ferromagnetic core (18), primary and secondary windings (21, 26) being provided on the ferromagnetic core (18), the primary winding (21) being connected at axially spaced locations to the outer circumferential portion (13) of the armature (10) by means of rotary contacts, (24, 25), characterised in that each rotary contact (24, 25) comprises first and second annular elements (30, 31; 45, 46), one annular element (30 or 31; 45 or 46) mounted on and in electrial contact with the armature (10) and the other annular element (31 or 30; 46 or 45) in electrical contact with the primary winding (21), the first annular element (30; 45) having a plurality of conductive sectors (38) separated by non-conductive sectors (37) and the second annular element (31; 46) having one or more conductive sectors (40; 47) with one or more non-conductive sectors (41; 48), the conductive sectors (38, 40; 47) of the first and second annular elements (30, 31; 45, 46) being arranged to maintain electrical contact upon rotation of the armature (10), the conductive sectors (38) on the first annular element (30; 45) and the non-conductive sectors (41; 48) on the second annular element (31; 46) being dimensioned and angularly disposed so that at all times there will be a brake in the annular conductive path defined by the two annular elements (30, 31; 45,46).

2. A homopolar device according to Claim 1 characterised in that a non-conductive sector (41) of the second annular element (31) is of greater width than any of the conductive sectors (38) of the first annular element (30).

3. A homopolar device according to Claim 2 characterised in that the second annular element (31) comprises a single conductive sector (40) and a single non-conductive sector (41).

4. A homopolar device according to Claim 1 in which both the first and second annular elements (45, 46) have a plurality of conductive sectors (38, 47), the second annular element (46) having fewer conductive sectors (47) than the first annular element (45) and the width of the non-conductive sectors (48) of the second annular element (46) having the following relationship to the width of the conductive sectors (38) of the first annular element (45):-

$$\alpha m /(n - m) > \beta$$

Where $m$ = the number of non-conductive sectors (48) on the second annular element (46);

$n$ = the number of conductive sectors (38) on the first annular element (45);

$\alpha$ = the angular width of the non-conductive sectors (48) on the second annular element (46); and

$\beta$ = the angular width of the conductive sectors (38) on the first annular element (45).

5. A homopolar device according to any one of the preceding claims characterised in that the conductive sectors (38) of one of the annular elements (30; 45) are in the form of conductive brushes which are spring-loaded into engagement with the other annular element (31; 46).

6. A homopolar device according to Claim 5 characterised in that the non-conductive sectors (41; 48) of the other annular element (31; 46) are filled with insulative material to form a continuous surface with the surface of the conductive sectors (40; 47) engaged by the brushes.

7. A homopolar device according to any one of the Claims 1 to 4 characterised in that the conductive sectors (38, 40; 38, 47) of one annular element (30, 31; 45, 46) are formed from a conductive liquid metal, the conductive sector (40, 38; 47,38) of the other annular elements (31, 30; 46, 45) being arranged to pass through the liquid metal and means being provided to restrict the liquid metal to the conductive sectors (38, 40; 38, 47) of said one annular element (30, 31; 45,46).

FIG 1

FIG 2

FIG 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4 ) |
|---|---|---|---|
| Y | CH-A-233654 (OERLIKON) <br> * page 1, line 32 - page 7, line 83; figures 1-17. * | 1, 2, 5, 6. | H02K31/02 <br> H02K31/04 |
| Y | US-A-3518474 (REBUT ET AL) <br> * column 2, line 22 - column 3, line 57; figures 1-3. * | 1, 2, 5, 6. | |
| P,A | GB-A-2203293 (JAGUAR CARS) <br> * page 10, line 1 - page 12, line 10; figure . * | 1 | |
| Y | GB-A-920009 (HENSCHEL-WERKE) <br> * page 2, line 35 - page 4, line 100; figures 2-12. * | 1-7. | |
| Y | US-A-4499392 (HEISER) <br> * column 3, line 4 - column 9, line 36; figures 1-10. * | 1-7. | |

**TECHNICAL FIELDS SEARCHED (Int. Cl.4 )**

H02K

| The present search report has been drawn up for all claims | | |
|---|---|---|
| Place of search | Date of completion of the search | Examiner |
| THE HAGUE | 06 SEPTEMBER 1989 | TIO K.H. |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

............................................................................

& : member of the same patent family, corresponding
   document

EPO FORM 1503 03.82 (P0401)